# EUROPEAN PATENT APPLICATION

(11) **EP 4 708 609 A2**
(43) Date of publication of application: **11.03.2026**
(21) Application number: 26150248.8
(22) Date of filing: 05.01.2026
(51) Int. Cl.: H02J 3/32, H02J 7/70, H02J 9/06, H02J 13/10, H02J 7/00

(54) **POWER SUPPLY SYSTEM, PARALLEL SOCKET, AND METHOD FOR CONTROLLING POWER SUPPLY SYSTEM**

(30) Priority: 21.08.2025 WO PCT/CN2025/116223
(71) Applicant: Shenzhen Hello Tech Energy Co., Ltd, Shenzhen, Guangdong 518109 (CN)
(72) Inventor: YANG, Yuanchi, Shenzhen, 518109 (CN); WANG, Xiaoping, Shenzhen, 518109 (CN)
(74) Representative: Dehns Germany Partnerschaft mbB

(57) **Abstract**

Provided is a power supply system (100). An all-in-one energy storage unit (10) is connected to a grid-connected receptacle (21) and an off-grid receptacle (22) of a parallel socket (20). The parallel socket (20) is connected to a fuel-powered generator (400). A bypass switch (24) is connected between the grid-connected receptacle (21) and the off-grid receptacle (22). When the power supply system (100) is in an off-grid state and meets a load demand, the bypass switch (24) is switched off; otherwise, the fuel-powered generator (400) is controlled to start, and the bypass switch (24) is switched on.

## Description

### FIELD

The present disclosure relates to the field of power supply device technologies, and more particularly, to a power supply system, a parallel socket, and a method for controlling a power supply system.

### BACKGROUND

To address electricity shortfalls during power outages, a household user typically relies on both an energy storage device and a fuel-powered generator to provide backup power for a core load. However, it was realized that the energy storage device is connected to a grid through a grid-connected port and a distribution box, requiring a professional electrician to wire the energy storage device to the distribution box. Similarly, the fuel-powered generator needs to be connected to the distribution box through an auto transfer switch (ATS), which also necessitates a professional electrician to wire the ATS to the distribution box. Both the energy storage device and the fuel-powered generator depend on professional electricians for complex wiring work in the distribution box, resulting not only in high mounting costs but also in cluttered wiring within the distribution box. Further, the energy storage device and the fuel-powered generator operate independently of each other. Although the energy storage device can seamlessly take over power supply during a power outage of the grid, the user has to manually switch to the fuel-powered generator when a battery of the energy storage device is depleted. Since the fuel-powered generator requires approximately 10 seconds to start up, the load will inevitably experience a power interruption during switching, significantly affecting power outage-sensitive loads (such as computers). Consequently, existing solutions suffer from drawbacks including complex and costly mounting, a power interruption to a load during switching, and a need for manual intervention, all of which substantially affecting user experience.

### SUMMARY

Embodiments of the present disclosure provide a power supply system, a parallel socket, and a method for controlling a power supply system, to solve at least one of the above technical problems.

In a first aspect, the present disclosure provides a power supply system for backup power supply to a household load. The power supply system includes: an all-in-one energy storage unit having a grid-connected port and an off-grid port; and a parallel socket. The parallel socket includes: a grid-connected receptacle connected to a main distribution box at a grid side, the grid-connected port being connected to the grid-connected receptacle through a first pluggable connector; an off-grid receptacle, the off-grid port being connected to the off-grid receptacle through a second pluggable connector; a generator receptacle configured to connect to a power supply port of a fuel-powered generator through a third pluggable connector, both the off-grid receptacle and the generator receptacle being connected to a sub-distribution box at a load side; and a bypass switch connected between the grid-connected receptacle and the off-grid receptacle. The power supply system is configured to: when the all-in-one energy storage unit is in an off-grid state and a power supply from the off-grid port of the all-in-one energy storage unit meets a load demand of the sub-distribution box, switch off the bypass switch; and when the all-in-one energy storage unit is in the off-grid state and the power supply from the off-grid port of the all-in-one energy storage unit fails to meet the load demand of the sub-distribution box, control the fuel-powered generator to start; and in response to the fuel-powered generator meeting a startup condition, control the all-in-one energy storage unit to switch from the off-grid state to a grid-connected state and switch on the bypass switch. After the all-in-one energy storage unit is switched to the grid-connected state, the all-in-one energy storage unit and the fuel-powered generator jointly supply power to a load of the sub-distribution box through the grid-connected port and the power supply port, respectively.

In a second aspect, the present disclosure provides a parallel socket. The parallel socket is applied in a power supply system for backup power supply to a household load. The power supply system includes an all-in-one energy storage unit. The all-in-one energy storage unit has a grid-connected port and an off-grid port. The parallel socket includes: a grid-connected receptacle connected to a main distribution box at a grid side, the grid-connected port being connected to the grid-connected receptacle through a first pluggable connector; an off-grid receptacle, the off-grid port being connected to the off-grid receptacle through a second pluggable connector; a generator receptacle configured to connect to a power supply port of a fuel-powered generator through a third pluggable connector, both the off-grid receptacle and the generator receptacle being connected to a sub-distribution box at a load side; and a bypass switch connected between the grid-connected receptacle and the off-grid receptacle. The parallel socket is configured to: when the all-in-one energy storage unit is in an off-grid state and a power supply from the off-grid port of the all-in-one energy storage unit meets a load demand of the sub-distribution box, switch off the bypass switch; and when the all-in-one energy storage unit is in the off-grid state and the power supply from the off-grid port of the all-in-one energy storage unit fails to meet the load demand of the sub-distribution box, control the fuel-powered generator to start; and in response to the fuel-powered generator meeting a startup condition, control the all-in-one energy storage unit to switch from the off-grid state to a grid-connected state and switch on the bypass switch, enabling the all-in-one energy storage unit and the fuel-powered generator to jointly supply power to a load of the sub-distribution box through the grid-connected port and the power supply port, respectively.

In a third aspect, the present disclosure provides a method for controlling a power supply system. The all-in-one energy storage unit further includes: a first switch; a second switch; a power convert system (PCS); and a power terminal connected to the grid-connected port through the first switch and connected to the off-grid port through the second switch. The method includes: obtaining a voltage of a grid when the all-in-one energy storage unit is in a grid-connected state; when the voltage of the grid is smaller than a first predetermined voltage, switching off the first switch and the bypass switch, and switching on the second switch; obtaining demand power at the load side and a remaining battery level of the all-in-one energy storage unit; controlling, when power of the all-in-one energy storage unit is smaller than the demand power or the remaining battery level of the all-in-one energy storage unit is smaller than a predetermined value, the fuel-powered generator to start; and in response to the fuel-powered generator meeting a startup condition, switching on the first switch and the bypass switch, and switching off the second switch.

With the power supply system according to the present disclosure, the parallel socket can be pre-mounted and connected to the distribution box, to facilitate a subsequent connection of the all-in-one energy storage unit and the fuel-powered generator to the distribution box, reducing mounting difficulty and thus lowering costs. Further, the parallel socket enables automatic power source switching. Furthermore, connecting the all-in-one energy storage unit and the fuel-powered generator to the distribution box through the parallel socket can also result in neater wiring within the distribution box.

Additional aspects and advantages of the embodiments of the present disclosure will be provided at least in part in the following description, or will become apparent at least in part from the following description, or can be learned from practicing of the embodiments of the present disclosure.

### BRIEF DESCRIPTION OF THE DRAWINGS

In order to clearly explain technical solutions of embodiments of the present disclosure, drawings used in description of the embodiments are briefly described below. Obviously, the drawings as described below are merely some embodiments of the present disclosure. Based on these drawings, other drawings can be obtained by those skilled in the art without creative effort.
FIG. 1 is a schematic circuit diagram of a power supply system according to an embodiment of the present disclosure.
FIG. 2 is a schematic scenario diagram of a power supply system according to an embodiment of the present disclosure.
FIG. 3 is a schematic circuit diagram of an all-in-one energy storage unit of a power supply system according to an embodiment of the present disclosure.
FIG. 4 is a schematic circuit diagram of a parallel socket of a power supply system according to an embodiment of the present disclosure.
FIG. 5 is a flowchart illustrating a power supply method according to an embodiment of the present disclosure.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure. In the description of the present disclosure, it should be understood that, the orientation or the position indicated by terms such as "center", "longitudinal", "transverse", "length", "width", "thickness", "over", "below", "front", "rear", "left", "right", "vertical", "horizontal", "top", "bottom", "inner", "outer", "clockwise", and "anti-clockwise" should be construed to refer to the orientation and the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure. In the description of the present disclosure, "plurality" means at least two, unless otherwise specifically defined.

In the description of the present disclosure, it should be noted that, unless otherwise clearly specified and limited, terms such as "install", "connect", and "connect to" should be understood in a broad sense. For example, it may be a fixed connection or a detachable connection or connection as one piece; mechanical connection or electrical connection; direct connection or indirect connection through an intermediate; internal communication of two components or the interaction relationship between two components. For those of ordinary skill in the art, the specific meaning of the above-mentioned terms in the present disclosure can be understood according to specific circumstances.

In the present disclosure, unless expressly stipulated and defined otherwise, the first feature "on" or "under" the second feature may mean that the first feature is in direct contact with the second feature, or the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

Various embodiments or examples for implementing different structures of the present disclosure are provided below. In order to simplify the description of the present disclosure, components and arrangements of specific examples are described herein. These specific examples are merely for the purpose of illustration, rather than limiting the present disclosure. Further, the same reference numerals and/or reference letters may appear in different examples of the present disclosure for the purpose of simplicity and clarity, instead of indicating a relationship between different embodiments and/or the discussed arrangements. In addition, the present disclosure provides examples of various specific processes and materials. However, applications of other processes and/or the use of other materials are conceivable for those of ordinary skill in the art.

To address electricity shortfalls during power outages, a household user typically relies on both an energy storage device and a fuel-powered generator to provide backup power for a core load. However, in existing solutions, the energy storage device is connected to a grid through a grid-connected port and a distribution box, requiring a professional electrician to wire the energy storage device to the distribution box. Similarly, the fuel-powered generator needs to be connected to the distribution box through an ATS, which also necessitates a professional electrician to wire the auto transfer switch to the distribution box. Both the energy storage device and the fuel-powered generator depend on professional electricians for complex wiring work in the distribution box, resulting not only in high mounting costs but also in cluttered wiring within the distribution box. Further, the energy storage device and the fuel-powered generator operate independently of each other. Although the energy storage device can seamlessly take over power supply during a power outage of the grid, the user has to manually switch to the fuel-powered generator when the battery of the energy storage device is depleted. Since the fuel-powered generator requires approximately 10 seconds to start up, the load will inevitably experience a power interruption during switching, significantly affecting power outage-sensitive loads (such as computers). Consequently, existing solutions suffer from drawbacks including complex and costly mounting, power interruption to a load during switching, and a need for manual intervention, all of which substantially affecting user experience.

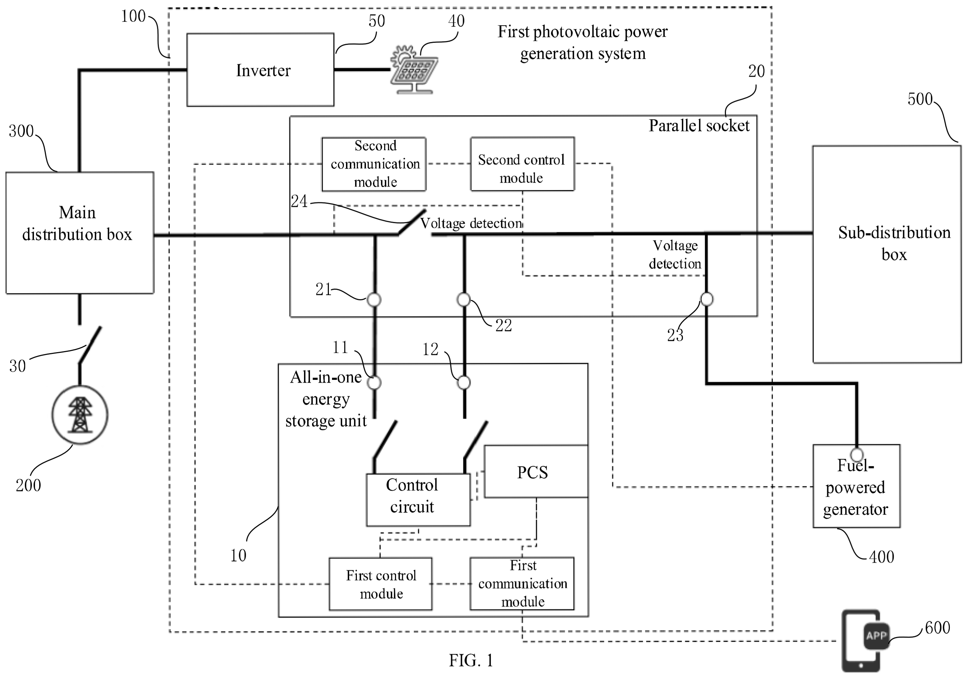

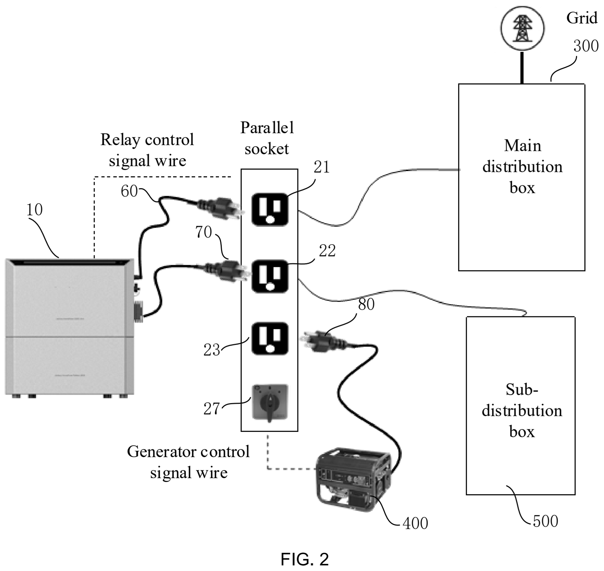

Referring to FIG. 1 and FIG. 2, a power supply system 100 is provided according to an embodiment of the present disclosure. The power supply system 100 is applied in backup power supply to a household load, and includes an all-in-one energy storage unit 10 and a parallel socket 20. The all-in-one energy storage unit 10 has a grid-connected port 11 and an off-grid port 12. The parallel socket 20 includes a grid-connected receptacle 21, an off-grid receptacle 22, a generator receptacle 23, and a bypass switch 24. The grid-connected port 11 is connected to the grid-connected receptacle 21 through a first pluggable connector 60. The grid-connected receptacle 21 is connected to a main distribution box 300 at a grid 200 side. The off-grid port 12 is connected to the off-grid receptacle 22 through a second pluggable connector 70. The generator receptacle 23 is configured to connect to a power supply port of a fuel-powered generator 400 through a third pluggable connector 80. Both the off-grid receptacle 22 and the generator receptacle 23 are connected to a sub-distribution box 500 at a load side. The bypass switch 24 is connected between the grid-connected receptacle 21 and the off-grid receptacle 22. The power supply system 100 is configured to: when the all-in-one energy storage unit 10 is in an off-grid state and a power supply from the off-grid port 12 of the all-in-one energy storage unit 10 meets a load demand of the sub-distribution box 500, switch off the bypass switch 24; and when the all-in-one energy storage unit 10 is in the off-grid state and the power supply from the off-grid port 12 of the all-in-one energy storage unit 10 fails to meet the load demand of the sub-distribution box 500, control the fuel-powered generator 400 to start; and after the fuel-powered generator 400 meets a startup condition, control the all-in-one energy storage unit 10 to switch from the off-grid state to a grid-connected state and switch on the bypass switch 24. After the all-in-one energy storage unit 10 is switched to the grid-connected state, the all-in-one energy storage unit 10 and the fuel-powered generator 400 jointly supply power to a load of the sub-distribution box 500 through the grid-connected port 11 and the power supply port, respectively.

With the power supply system 100 according to the present disclosure, the parallel socket 20 can be pre-mounted and connected to the distribution box, to facilitate a subsequent connection of the all-in-one energy storage unit 10 and the fuel-powered generator 400 to the distribution box, reducing mounting difficulty and thus lowering costs. Further, the parallel socket 20 enables automatic power source switching. Furthermore, connecting the all-in-one energy storage unit 10 and the fuel-powered generator 400 to the distribution box through the parallel socket 20 can also result in neater wiring within the distribution box.

In some embodiments, the fuel-powered generator may be a diesel generator.

In an embodiment, "grid-connected" refers to that the power supply system 100 is directly connected to and operates in the public grid 200 (a national or regional power transmission network). When power of the power supply system 100 cannot meet a power demand of a household load, a shortfall is supplemented by the grid 200. When the power of the power supply system 100 meets the load demand of the household load and there is surplus electricity, the surplus electricity is fed back into the grid 200. "Off-grid" refers to that the power supply system 100 operates independently and is completely disconnected from the public grid 200.

In an embodiment of the present disclosure, the parallel socket 20 may be prefixed at a wall near the main distribution box 300. The grid-connected receptacle 21 is permanently connected to the household main distribution box 300 through pre-mounted cables to access the grid 200, while the off-grid receptacle 22 and the generator receptacle 23 are both connected through pre-mounted cables to the sub-distribution box 500 responsible for a critical load.

In an embodiment of the present disclosure, the grid-connected port 11 of the all-in-one energy storage unit 10 may be plugged into the grid-connected receptacle 21 of the parallel socket 20 through the first pluggable connector 60, and the off-grid port 12 of the all-in-one energy storage unit 10 may be plugged into the off-grid receptacle 22 of the parallel socket 20 through the second pluggable connector 70. When necessary, an output terminal of the fuel-powered generator 400 may be plugged into the generator receptacle 23 of the parallel socket 20 through the third pluggable connector 80 equipped at the output terminal.

Taking the first pluggable connector 60 and the grid-connected receptacle 21 as an example, in some embodiments, the first pluggable connector 60 and the grid-connected receptacle 21 adopt a snap-fit structure suitable for scenarios requiring frequent plugging and unplugging. For example, the first pluggable connector 60 may have an elastic snap formed at a housing of the first pluggable connector 60, and the grid-connected receptacle 21 may have an engagement groove at a part of the grid-connected receptacle 21 corresponding to the elastic snap. When the elastic snap is inserted into the engagement groove, the elastic snap is automatically locked.

In some embodiments, the first pluggable connector 60 and the grid-connected receptacle 21 may adopt a threaded engagement. A threaded structure is suitable for scenarios requiring a long-term fixed connection. For example, an outer wall of the first pluggable connector 60 has external threads, and an inner wall of the grid-connected receptacle 21 has internal threads, achieving fixation through a rotation.

In some embodiments, fixation methods for the first pluggable connector 60 with the grid-connected receptacle 21, the second pluggable connector 70 with the off-grid receptacle 22, and the third pluggable connector 80 with the generator receptacle 23 may be the same or different. For specific connection methods, the user can select an appropriate connector type as desired to balance a mounting efficiency and operational reliability, which is not elaborated herein.

In an embodiment of the present disclosure, the bypass switch 24 is built into the parallel socket 20. Two terminals of the bypass switch 24 are connected to the grid-connected receptacle 21 and the off-grid receptacle 22, respectively. During operation of the power supply system 100, if mains power is interrupted, the all-in-one energy storage unit 10 is switched to the off-grid state, and supplies power to the sub-distribution box 500 through the off-grid port 12 and the off-grid receptacle 22, in which case the bypass switch 24 remains switched off. If the load demand of the sub-distribution box 500 suddenly increases (e.g., the user turns on both a high-power electric heater and a microwave oven) and exceeds an output capacity of the all-in-one energy storage unit 10, the fuel-powered generator 400 is activated. In response to detecting a stable and compliant voltage at the generator receptacle 23, the all-in-one energy storage unit 10 is controlled to switch from the off-grid state to the grid-connected state and the bypass switch 24 is switched on. In some embodiments, the all-in-one energy storage unit 10 is controlled to switch from the off-grid state to the grid-connected state and then the bypass switch 24 is switched on, or the bypass switch 24 is switched on while controlling the all-in-one energy storage unit 10 to switch from the off-grid state to the grid-connected state. After the switch is completed, the grid-connected port 11 of the all-in-one energy storage unit 10 is connected to the sub-distribution box 500 through the grid-connected receptacle 21 and the switched-on bypass switch 24, while the fuel-powered generator 400 is also connected to the sub-distribution box 500 through the generator receptacle 23. The all-in-one energy storage unit 10 and the fuel-powered generator 400 work together to provide sufficient power for the critical load of the sub-distribution box 500.

Referring to FIG. 1 to FIG. 4, in some embodiments, the power supply system 100 includes a control module. The control module is in a communication connection with a remote user terminal 600. The control module is configured to control, based on an instruction transmitted by the remote user terminal 600, the all-in-one energy storage unit 10 to switch from the off-grid state to the grid-connected state or from the grid-connected state to the off-grid state.

In this way, when the all-in-one energy storage unit 10 supplies power in the off-grid state, but the load is too large and demand power is too high, the user can proactively switch to the grid-connected state through the remote user terminal 600 to meet the load demand, and can also switch back to the off-grid state from the grid-connected state when high power is no longer needed.

In some embodiments, the power supply system 100 includes a control module. The control module includes a first control module 13 disposed in the all-in-one energy storage unit 10 and a second control module 25 disposed in the parallel socket 20. Each of the first control module 13 and the second control module 25 is in a communication connection with the remote user terminal 600. The first control module 13 is configured to control the all-in-one energy storage unit 10. The second control module 25 is configured to control the parallel socket 20.

In some embodiments, the control module further includes a first communication module 14 disposed in the all-in-one energy storage unit 10 and a second communication module 26 disposed in the parallel socket 20. The first communication module 14 is connected to the first control module 13. The first control module 13 is in a communication connection with the remote user terminal 600 through the first communication module 14. The second communication module 26 is connected to the second control module 25. The second control module 25 is in a communication connection with the remote user terminal 600 through the second communication module 26.

In an embodiment, the control module may be a microcontroller with a built-in wireless communication chip (such as a Wi-Fi/4G module) to establish a connection with a mobile app of the user or a web interface via a TCP/IP protocol. For example, after the user transmits a "switch to grid-connected state" instruction from a terminal, the control module parses the instruction, and generates a control signal to switch the all-in-one energy storage unit 10 from the off-grid state to the grid-connected state. For example, when an off-grid power supply capability of the all-in-one energy storage unit 10 is insufficient for the household load, the user can remotely trigger the control module through the remote user terminal 600 to connect to the fuel-powered generator 400 or a power source of the grid 200, ensuring continuous operation of the load.

Referring to FIG. 1 and FIG. 2, in some embodiments, the all-in-one energy storage unit 10 further includes a power terminal, a first switch 15, a second switch 16, and a PCS 17. The power terminal is connected to the grid-connected port 11 through the first switch 15 and connected to the off-grid port 12 through the second switch 16. The power supply system 100 is configured to: detect a voltage of the grid 200 at the grid-connected port 11 and a generator voltage at the generator receptacle 23; and control, through the PCS 17 when the voltage of the grid 200 is greater than a first predetermined voltage or the generator voltage is greater than a second predetermined voltage, the first switch 15 to be switched on and the second switch 16 to be switched off, to switch the all-in-one energy storage unit 10 to the grid-connected state; and control, through the PCS 17 when the voltage of the grid 200 is smaller than or equal to the first predetermined voltage and the generator voltage is smaller than or equal to the second predetermined voltage, the second switch 16 to be switched on and the first switch 15 to be switched off, to switch the all-in-one energy storage unit 10 to the off-grid state.

In this way, when the all-in-one energy storage unit 10 is connected to the distribution box and the grid 200 supplies power normally, the power terminal enables, through the grid-connected port 11 and the distribution box, the all-in-one energy storage unit 10 and the grid 200 to jointly supply power to the household load. When the all-in-one energy storage unit 10 meets the power demand of the household load and has surplus electricity, the surplus electricity may be fed back into the grid 200. In an event of a power outage or abnormal power supply of the grid 200, the power terminal supplies power to the household load through the off-grid port 12 and the distribution box. Thus, utilization of the all-in-one energy storage unit 10 can be maximized while ensuring uninterrupted power supply for the household.

In some embodiments, the all-in-one energy storage unit 10 further includes the power terminal, the first switch 15, the second switch 16, and the PCS 17. The PCS 17, as one of the core devices in the all-in-one energy storage unit 10, undertakes the key tasks of bidirectional energy conversion and control. A primary function of the PCS 17 is to establish an efficient, flexible, and safe "bridge" between an energy storage battery (direct current) and the grid 200 or the load (alternating current), achieving charge/discharge management of electrical energy and operation mode switching. In an embodiment of the present disclosure, the PCS 17 may be configured to control the all-in-one energy storage unit 10 through the first control module 13, and communicate with the second communication module 26 through the first communication module 14 to control the parallel socket 20 through the second control module 25.

In some embodiments, the power terminal serves as a main energy outlet and splits a current into two paths, one of which is connected to the grid-connected port 11 through the first switch 15, and the other one of which is connected to the off-grid port 12 through the second switch 16. The PCS 17 may monitor in real time the voltage of the grid 200 at the grid-connected port 11 (e.g., 230 V alternating current) and the generator voltage at the generator receptacle 23 (e.g., 230 V alternating current output from the fuel-powered generator 400) through voltage sensors, and compare voltage values with the first predetermined voltage (e.g., 207 V) and the second predetermined voltage (e.g., 210 V). When the voltage is higher than 207 V or the generator voltage is higher than 210 V, the PCS 17 controls the first switch 15 to be switched on and the second switch 16 to be switched off, enabling the all-in-one energy storage unit 10 to be switched to the grid-connected state and switching on the bypass switch 24. The grid 200 or the fuel-powered generator 400 supplies, through the grid-connected port 11, power to the load together with the all-in-one energy storage unit 10. Otherwise, the all-in-one energy storage unit 10 is switched to the off-grid state, where the all-in-one energy storage unit 10 supplies, through the off-grid port 12, power to the load alone.

Referring to FIG. 1, in some embodiments, the power supply system 100 includes a third switch 30. The main distribution box 300 is connected to the grid 200 through the third switch 30. The third switch 30 is configured to be switched off when the voltage of the grid 200 is smaller than or equal to the first predetermined voltage.

In this way, by using the third switch 30 to isolate the grid 200 when the voltage of the grid 200 drops, a reverse impact from the low-voltage grid 200 on the power supply system 100 can be avoided.

In some embodiments, the third switch 30 may be implemented as an automatic circuit breaker with voltage detection capability. When the PCS 17 detects that the voltage of the grid 200 is below 207 V, the PCS 17 transmits a switch-off signal to the third switch 30 through the first communication module 14, causing the third switch 30 to physically disconnect from the grid 200. Thus, reverse electricity feed from the grid 200 into faulty lines under low-voltage conditions can be avoided, protecting the power supply system 100 from voltage fluctuations. For example, when the voltage of the grid 200 suddenly drops due to a lightning strike, the third switch 30 is quickly switched off, preventing a low-voltage current from damaging an inverter 50 of the all-in-one energy storage unit 10.

In some embodiments, the power supply system 100 includes a first photovoltaic power generation system 40 connected to the main distribution box 300. The PCS 17 is in a communication connection with the bypass switch 24. In addition, the PCS 17 is configured to control, when the first switch 15 is switched on, the bypass switch 24 to be switched on, and control, when the second switch 16 is switched on and the first photovoltaic power generation system 40 is turned on, the bypass switch 24 to be switched on.

Thus, when in the grid-connected state, the all-in-one energy storage unit 10, the first photovoltaic power generation system 40, and the grid 200 can jointly supply power to the household load. When power output from the all-in-one energy storage unit 10 and the first photovoltaic power generation system 40 cannot meet the power demand of the household load, the shortfall is supplemented by the grid 200. When the power output from the all-in-one energy storage unit 10 and the first photovoltaic power generation system 40 meets the power demand of the household load and there is surplus electricity, the surplus electricity is fed back into the grid 200. When in the off-grid state, the all-in-one energy storage unit 10 acts as a voltage source to supply power to the main distribution box 300, providing a constant voltage to drive the first photovoltaic power generation system 40 to generate electricity. In this way, the all-in-one energy storage unit 10 and the first photovoltaic power generation system 40 can jointly supply power to the household load, delivering greater power after a disconnection from the grid to meet household backup power requirements for the power outage.

In conventional technical solutions involving the first photovoltaic power generation system 40, when the grid 200 is available, the grid 200 acts as a voltage source to provide a voltage for the first photovoltaic power generation system 40, driving the first photovoltaic power generation system 40 to operate and generate electricity. However, when the grid 200 experiences the power outage, the grid 200 becomes unavailable and thus cannot provide the voltage to drive the first photovoltaic power generation system 40 to operate and generate electricity, causing the first photovoltaic power generation system to cease operation in response to the power outage of the grid 200. In contrast, in the embodiment of the present disclosure, after the power outage of the grid 200, the all-in-one energy storage unit 10 is switched from the grid-connected state to the off-grid state, and correspondingly switched from a current-source operation mode in the grid-connected state to a voltage-source operation mode in the off-grid state, continuously providing a stable voltage for the first photovoltaic power generation system 40 to drive the first photovoltaic power generation system 40 to maintain operation and electricity generation. Consequently, regardless of whether the grid is available or experiences the power outage, the first photovoltaic power generation system 40 can be kept continuously operating and generating electricity, offering the user longer backup power endurance and higher backup power capacity after the power outage.

In some embodiments, the power supply system 100 includes the first photovoltaic power generation system 40 connected to the main distribution box 300 through the inverter 50. When the all-in-one energy storage unit 10 is in the grid-connected state (the first switch 15 is switched on), the PCS 17 transmits a switch-on instruction to the bypass switch 24, enabling a bypass path between the main distribution box 300 and the sub-distribution box 500 to be switched on. When the all-in-one energy storage unit 10 is switched to the off-grid state (the second switch 16 is switched on) and the first photovoltaic power generation system 40 is turned on, the PCS 17 still controls the bypass switch 24 to be switched on, allowing the first photovoltaic power generation system 40 to supply power to the sub-distribution box 500 through the main distribution box 300. In this way, a hybrid power supply mode combining the all-in-one energy storage unit 10 and the first photovoltaic power generation system 40 is formed, enhancing system endurance and increasing backup power available for the household load after the power outage.

Referring to FIG. 1, in some embodiments, the power supply system 100 includes the first photovoltaic power generation system 40 connected to the main distribution box 300. The bypass switch 24 is in a communication connection with a remote user terminal, and is configured to be switched on under control of the remote user terminal when the second switch 16 is switched on and the first photovoltaic power generation system 40 is turned on.

Thus, with remote control, the all-in-one energy storage unit 10 acts as the voltage source to supply power to the main distribution box 300 when in the off-grid state, providing the constant voltage to drive the photovoltaic power generation system to generate electricity. In this way, the all-in-one energy storage unit and the first photovoltaic power generation system can jointly supply power to the household load. When in the off-grid state, the all-in-one energy storage unit 10 operates in combination with the first photovoltaic power generation system 40 to form a hybrid power supply, enhancing the system endurance, and providing greater power to meet the household backup power requirements after the power outage.

In some embodiments, the bypass switch 24 may have a built-in 4G communication module, allowing the user to transmit a "switch on bypass switch 24" instruction to the bypass switch 24 through a mobile app. For example, when the all-in-one energy storage unit 10 is in the off-grid state and the photovoltaic power generation system is started, the user remotely triggers the bypass switch 24 to be switched on, enabling the first photovoltaic power generation system 40 to supply power to the sub-distribution box 500 through the main distribution box 300 and charge a battery pack 19 of the all-in-one energy storage unit 10. Thus, a complementary power supply chain is formed by the first photovoltaic power generation system 40 and the all-in-one energy storage unit 10.

In some embodiments, the PCS 17 is in a communication connection with the bypass switch 24, and is configured to: detect a voltage signal at the power terminal; and control the bypass switch 24 to be switched on when the voltage signal is abnormal.

Thus, in a case of a failure of the all-in-one energy storage unit 10, the main distribution box 300 and the sub-distribution box 500 may be connected through the parallel socket 20.

In some embodiments, the PCS 17 is configured to monitor an output current of the power terminal in real time through a current sensor. When a sudden change in the ouput current (e.g., exceeding a rated value by 20%) or excessive voltage harmonics (e.g., THD>5%) are detected, the switch-on instruction is immediately transmitted to the bypass switch 24 while controlling the all-in-one energy storage unit to stop the output. For example, when the all-in-one energy storage unit 10 experiences an unstable output voltage due to a failure of the battery pack 19, the all-in-one energy storage unit stops the output and the bypass switch 24 is switched on in response to receiving the switch-on instruction. In this way, the main distribution box 300 is directly connected to the sub-distribution box 500, which allows direct power supply from the grid 200 or the fuel-powered generator 400, avoiding a power outage for the load.

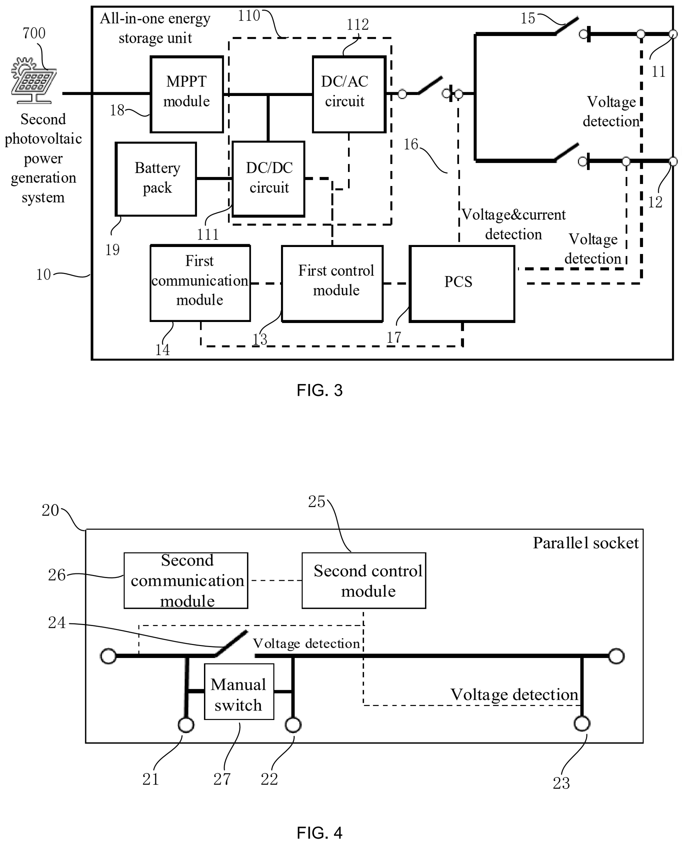

Referring to FIG. 1 and FIG. 3, in some embodiments, the parallel socket 20 includes a manual switch 27. The grid-connected receptacle 21 is connected to the off-grid receptacle 22 through the manual switch 27.

In this way, the manual switch 27 can replace the bypass switch 24 in a case of a failure of the bypass switch 24.

In some embodiments, the manual switch 27 is a mechanical toggle switch mounted at a surface of the parallel socket 20. When the bypass switch 24 fails to operate due to a failure of an electronic component, the user can manually toggle the switch to connect the grid-connected receptacle 21 to the off-grid receptacle 22, achieving a physical connection between the main distribution box 300 and the sub-distribution box 500. For example, in emergencies where an automatic control system fails, basic power supply is maintained through the manual switch 27 to ensure normal operation of basic household loads (such as lighting).

In other embodiments, the manual switch 27 may be arranged separately from the parallel socket 20.

Referring to FIG. 1 and FIG. 3, in some embodiments, the all-in-one energy storage unit 10 includes an MPPT module 18 and a battery pack 19. The MPPT module 18 and the battery pack 19 are connected to the power terminal through a control circuit 110. The PCS 17 is configured to: control, when the first switch 15 is switched on, the control circuit 110 to control the MPPT module 18 and/or the battery pack 19 to supply power at a constant current through the power terminal; and control, when the second switch 16 is switched on, the control circuit 110 to control the MPPT module 18 and/or the battery pack 19 to supply power at a constant voltage through the power terminal.

Thus, a power supply mode for each of the MPPT module 18 and the battery pack 19 can be dynamically adjusted.

In an embodiment, the control circuit 110 includes a DC/DC circuit 111 and a DC/AC circuit 112. The MPPT module 18 is configured to connect to a second photovoltaic power generation system 700 mounted externally. The battery pack 19 is connected to the DC/DC circuit 111. The MPPT module 18 and the DC/DC circuit 111 are connected to the DC/AC circuit 112, and connected to the first switch 15 and the second switch 16 through the DC/AC circuit 112.

In some embodiments, when the first switch 15 is switched on (the grid-connected state), the MPPT module 18 performs photovoltaic power generation using maximum power point tracking and inputs generated electricity to the power terminal, while the battery pack 19 discharges at a constant current through a DC/DC converter; when the second switch 16 is switched on (the off-grid state), the control circuit 110 is switched to a "constant-voltage mode," and the battery pack 19 outputs a constant voltage (e.g., 220 V) to ensure load voltage stability.

In some embodiments, a parallel socket is further provided. The parallel socket is applied in the power supply system.

The power supply system includes an all-in-one energy storage unit. The all-in-one energy storage unit has a grid-connected port and an off-grid port. The parallel socket includes: a grid-connected receptacle connected to a main distribution box at a grid side, the grid-connected port being connected to the grid-connected receptacle through a first pluggable connector; an off-grid receptacle, the off-grid port being connected to the off-grid receptacle through a second pluggable connector; a generator receptacle configured to connect to a power supply port of a fuel-powered generator through a third pluggable connector, both the off-grid receptacle and the generator receptacle being connected to a sub-distribution box at a load side; and a bypass switch connected between the grid-connected receptacle and the off-grid receptacle.

The parallel socket is configured to: when the all-in-one energy storage unit is in an off-grid state and a power supply from the off-grid port of the all-in-one energy storage unit meets a load demand of the sub-distribution box, switch off the bypass switch; and when the all-in-one energy storage unit is in the off-grid state and the power supply from the off-grid port of the all-in-one energy storage unit fails to meet the load demand of the sub-distribution box, control the fuel-powered generator to start; and after the fuel-powered generator meets a startup condition, control the all-in-one energy storage unit to switch from the off-grid state to a grid-connected state and switch on the bypass switch, enabling the all-in-one energy storage unit and the fuel-powered generator to jointly supply power to a load of the sub-distribution box through the grid-connected port and the power supply port, respectively.

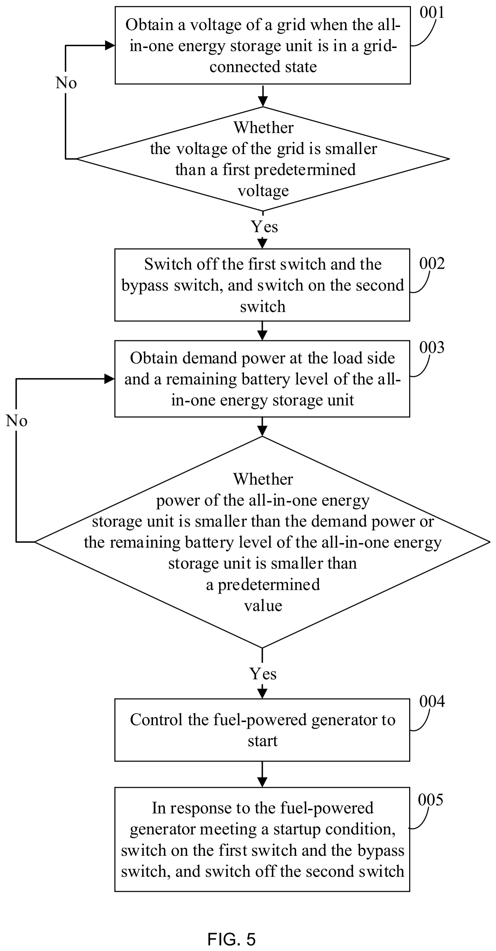

Referring to FIG. 5, in some embodiments, a method for controlling the power supply system 100 is further provided, for the PCS 17 of the power supply system 100 to perform power source switching. The method includes following steps 001 to 005.

At step 001, a voltage of a grid is obtained when the all-in-one energy storage unit is in a grid-connected state.

At step 002, when the voltage of the grid is smaller than a first predetermined voltage, the first switch and the bypass switch are switched off, and the second switch is switched on.

At step 003, demand power at the load side and a remaining battery level of the all-in-one energy storage unit are obtained.

At step 004, when power of the all-in-one energy storage unit is smaller than the demand power or the remaining battery level of the all-in-one energy storage unit is smaller than a predetermined value, the fuel-powered generator is controlled to start.

At step 005, in response to the fuel-powered generator meeting a startup condition, the first switch and the bypass switch are switched on, and the second switch is switched off.

In this way, the parallel socket 20 enables a connection of the all-in-one energy storage unit 10 and the fuel-powered generator 400 to the distribution box, reducing the mounting difficulty and thus lowering the costs. Further, the parallel socket 20 enables the automatic power source switching.

For example, when the all-in-one energy storage unit 10 is in the grid-connected state, the PCS 17 obtains the voltage of the grid 200 once every 0.1 seconds through the voltage sensor. When the voltage of the grid 200 is detected to be below 207 V for three consecutive times (e.g., due to the power outage), the first switch 15 and the bypass switch 24 are immediately switched off, and the second switch 16 is switched on, enabling the all-in-one energy storage unit 10 to be switched to the off-grid state. In this case, the demand power at the load side (e.g., 5 kW) is monitored by the system through the current sensor, and a state of charge (SOC) value (e.g., the remaining battery level of 20%) of the battery pack 19 is read. When the demand power exceeds rated power (e.g., 4 kW) of the all-in-one energy storage unit 10 or the SOC is below 15%, generator ignition is triggered through an automatic start module (e.g., a built-in relay) of the fuel-powered generator 400. When an output voltage of the generator stabilizes (e.g., 230 V±5%), the first switch 15 and the bypass switch 24 are switched on, and the second switch 16 is switched off, enabling the all-in-one energy storage unit 10 and the fuel-powered generator 400 to supply power.

The present disclosure further provides a computer-readable storage medium for storing a computer program. The computer-readable storage medium may be applied in a computer device. The computer program enables the computer device to perform corresponding procedures in the method for controlling the power supply system according to an embodiment of the present disclosure, which is not elaborated herein for simplicity.

The present disclosure further provides a computer program product, which includes computer instructions stored in a computer-readable storage medium. The computer instructions, when read and executed by a processor of a computer device, cause the computer device to perform corresponding procedures in the method for controlling the power supply system according to an embodiment of the present disclosure, which is not elaborated herein for simplicity.

The present disclosure further provides a computer program, which includes computer instructions stored in a computer-readable storage medium. The computer instructions, when read and executed by a processor of a computer device, cause the computer device to perform corresponding procedures in the method for controlling the power supply system of the present disclosure, which is not elaborated herein for simplicity.

It should be understood that the processor of the present disclosure may be an integrated circuit chip having signal processing capabilities. In an implementation, actions of the above method embodiments may be accomplished by an integrated logic circuit in hardware in the processor or by instructions in the form of software. The above processor may be a general-purpose processor, a Digital Signal Processor (DSP), an Application Specific Integrated Circuit (ASIC), a Field-Programmable Gate Array (FPGA) or other programmable logic devices, a discrete gate or a transistor logic device, and a discrete hardware component. The method, actions, and logic block diagrams according to any of the embodiments of the present disclosure may be implemented or performed. The general-purpose processor may be a microprocessor, or the processor may further be any conventional processor, etc. The actions of the method disclosed in combination with any of the embodiments of the present disclosure may be directly embodied as performed by a hardware decoding processor or performed by a combination of a hardware module and a software module in a decoding processor. The software module may be located in a random memory, a flash memory, a read-only memory, a programmable read-only memory or an electrically erasable programmable memory, a register, and other storage media mature in the art. The storage medium is located in the memory. The processor reads information in the memory and completes the actions of the above method in combination with the hardware.

It can be appreciated that the memory in the embodiments of the present disclosure may be a transitory memory or a non-transitory memory, or may include both transitory and non-transitory memories. Here, the non-transitory memory may be a Read-Only Memory (ROM), a Programmable ROM (PROM), an Erasable PROM (EPROM), an Electrically EPROM (EEPROM), or a flash memory. The transitory memory may be a Random Access Memory (RAM), which is used as an external cache. As illustrative, rather than limiting, many forms of RAMs are available, including for example Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM) ), and Direct Rambus RAM (DR RAM). It should be noted that the memory used for the system and method described in the present disclosure is intended to include, but not limited to, these and any other suitable types of memories.

It can be appreciated by those skilled in the art that units and algorithm steps in the embodiments described in connection with the embodiments disclosed herein can be implemented in electronic hardware or any combination of computer software and electronic hardware. Whether these functions are executed by hardware or software depends on specific applications and design constraint conditions of the technical solutions. Those skilled in the art may use different methods for each specific application to implement the described functions, and such implementation is to be encompassed by the scope of this disclosure.

Those skilled in the art can clearly understand that, for the convenience and conciseness of the description, for the specific operation processes of the systems, devices, and units described above, reference can be made to the corresponding processes in the foregoing method embodiments, which are not elaborated herein for simplicity.

In the embodiments of the present disclosure, the term "module" or "unit" refers to a computer program or a part of a computer program having a predetermined function, which works together with other relevant parts to achieve a predetermined objective, and can be implemented entirely or partially using software, hardware (such as processing circuitry or memory), or a combination thereof. Similarly, one processor (or a plurality of processors or memories) can be used to implement one or more modules or units. Further, each module or unit may be a part of an integral module or unit containing the function of that module or unit.

In the embodiments of the present disclosure, it can be appreciated that the disclosed systems, devices, and methods may be implemented in other ways. For example, the device embodiments described above are illustrative only. For example, the divisions of the units are only divisions based on logical functions, and there may be other divisions in actual implementations. For example, more than one unit or component may be combined or integrated into another system, or some features can be ignored or omitted. In addition, the mutual coupling or direct coupling or communicative connection as shown or discussed may be indirect coupling or communicative connection between devices or units via some interfaces which may be electrical, mechanical, or in any other forms.

The units described as separate components may or may not be physically separated, and the components shown as units may or may not be physical units, that is, they may be co-located or distributed across a number of network elements. Some or all of the units may be selected according to actual needs to achieve the objects of the solutions of the embodiments.

In addition, the functional units in the present disclosure may be integrated into one processing unit, or alternatively be separate physical modules, or two or more units may be integrated into one unit.

When the function is implemented in the form of a software functional unit and sold or used as a standalone product, it can be stored in a computer-readable storage medium. Based on this understanding, all or part of the technical solutions according to the present disclosure, or the part thereof that contributes to the prior art, can be embodied in the form of a software product. The computer software product may be stored in a storage medium and contain instructions to enable a computer device, such as a personal computer and a server, to perform all or part of the steps of the method described in each of the embodiments of the present disclosure. The storage medium may include various mediums capable of storing program codes, such as a Universal Serial Bus flash drive, a mobile hard disk, an ROM, an RAM, a magnetic disk, or an optical disc.

Reference throughout this specification to "certain embodiments", "an embodiment", "some embodiments", "illustrative embodiments", "an example", "a specific example", or "some examples" means that a particular feature, structure, material, or characteristic described in connection with the embodiment or example is included in at least one embodiment or example of the present disclosure. The appearances of the above phrases in various places throughout this specification are not necessarily referring to the same embodiment or example. Further, the particular features, structures, materials, or characteristics may be combined in any suitable manner in one or more embodiments or examples.

In addition, terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality" means at least two, unless otherwise specifically defined.

Although the embodiments of the present disclosure have been shown and described above, it should be understood that the above-mentioned embodiments are exemplary and should not be construed as limiting the present disclosure. Those skilled in the art can make changes, modifications, substitutions, and alternations to the above-mentioned embodiments within the scope of the present disclosure. The scope of the present disclosure shall be defined by the claims as appended and their equivalents.

## Claims

1. A power supply system for backup power supply to a household load, the power supply system comprising:
an all-in-one energy storage unit having a grid-connected port and an off-grid port; and
a parallel socket comprising:
a grid-connected receptacle connected to a main distribution box at a grid side, wherein the grid-connected port is connected to the grid-connected receptacle through a first pluggable connector;
an off-grid receptacle, wherein the off-grid port is connected to the off-grid receptacle through a second pluggable connector;
a generator receptacle configured to connect to a power supply port of a fuel-powered generator through a third pluggable connector, wherein both the off-grid receptacle and the generator receptacle are connected to a sub-distribution box at a load side; and
a bypass switch connected between the grid-connected receptacle and the off-grid receptacle;
wherein the power supply system is configured to:
when the all-in-one energy storage unit is in an off-grid state and a power supply from the off-grid port of the all-in-one energy storage unit meets a load demand of the sub-distribution box, switch off the bypass switch; and
when the all-in-one energy storage unit is in the off-grid state and the power supply from the off-grid port of the all-in-one energy storage unit fails to meet the load demand of the sub-distribution box, control the fuel-powered generator to start; and in response to that the fuel-powered generator meets a startup condition, control the all-in-one energy storage unit to switch from the off-grid state to a grid-connected state and switch on the bypass switch, wherein after the all-in-one energy storage unit is switched to the grid-connected state, the all-in-one energy storage unit and the fuel-powered generator jointly supply power to a load of the sub-distribution box through the grid-connected port and the power supply port, respectively.

2. The power supply system according to claim 1, further comprising:
a control module in a communication connection with a remote user terminal, wherein the control module is configured to control, based on an instruction transmitted by the remote user terminal, the all-in-one energy storage unit to switch from the off-grid state to the grid-connected state or from the grid-connected state to the off-grid state.

3. The power supply system according to claim 2, wherein the control module further comprises:
a first communication module disposed in the all-in-one energy storage unit; and
a second communication module disposed in the parallel socket, wherein the control module is in the communication connection with the remote user terminal through the first communication module and the second communication module.

4. The power supply system according to claim 1, wherein the all-in-one energy storage unit comprises:
a first switch;
a second switch;
a power terminal connected to the grid-connected port through the first switch and connected to the off-grid port through the second switch; and
a power convert system,
wherein the power supply system is configured to:
detect a voltage of a grid at the grid-connected port and a generator voltage at the generator receptacle; and
when the voltage of the grid is greater than a first predetermined voltage or the generator voltage is greater than a second predetermined voltage, control, by the power convert system, the first switch to be switched on and the second switch to be switched off, to switch the all-in-one energy storage unit to the grid-connected state; and when the voltage of the grid is smaller than or equal to the first predetermined voltage and the generator voltage is smaller than or equal to the second predetermined voltage, control, by the power convert system, the second switch to be switched on and the first switch to be switched off, to switch the all-in-one energy storage unit to the off-grid state.

5. The power supply system according to claim 4, further comprising:
a third switch, wherein the main distribution box is connected to the grid through the third switch,
wherein the power supply system is configured to control, when the voltage of the grid is smaller than or equal to the first predetermined voltage, the third switch to be switched off.

6. The power supply system according to claim 4, further comprising:
a first photovoltaic power generation system connected to the main distribution box, wherein the power convert system is in a communication connection with the bypass switch; and the power convert system is configured to: control, when the first switch is switched on, the bypass switch to be switched on; and control, when the second switch is switched on and the first photovoltaic power generation system is turned on, the bypass switch to be switched on; or
a first photovoltaic power generation system connected to the main distribution box, wherein the bypass switch is in a communication connection with a remote user terminal; and the bypass switch is configured to be switched on under control of the remote user terminal when the second switch is switched on and the first photovoltaic power generation system is turned on.

7. The power supply system according to claim 4, wherein:
the power convert system is in a communication connection with the bypass switch; and
the power convert system is configured to: detect a voltage signal at the power terminal; and control the bypass switch to be switched on when the voltage signal is abnormal.

8. The power supply system according to claim 4, wherein the all-in-one energy storage unit further comprises an MPPT module and a battery pack, wherein:
the MPPT module and the battery pack are connected to the power terminal through a control circuit; and
the power convert system is configured to:
control, when the first switch is switched on, the control circuit to control the MPPT module and/or the battery pack to supply power at a constant current through the power terminal; and
control, when the second switch is switched on, the control circuit to control the MPPT module and/or the battery pack to supply power at a constant voltage through the power terminal.

9. The power supply system according to claim 8, further comprising:
a second photovoltaic power generation system connected to the MPPT module.

10. The power supply system according to claim 1, wherein each of the first pluggable connector and the second pluggable connector is fixedly connected to the parallel socket through a snap-fit or a threaded engagement.

11. A parallel socket, applied in a power supply system for backup power supply to a household load, wherein the power supply system comprises an all-in-one energy storage unit, the all-in-one energy storage unit having a grid-connected port and an off-grid port, and wherein the parallel socket comprises:
a grid-connected receptacle connected to a main distribution box at a grid side, wherein the grid-connected port is connected to the grid-connected receptacle through a first pluggable connector;
an off-grid receptacle, wherein the off-grid port is connected to the off-grid receptacle through a second pluggable connector;
a generator receptacle configured to connect to a power supply port of a fuel-powered generator through a third pluggable connector, wherein both the off-grid receptacle and the generator receptacle are connected to a sub-distribution box at a load side; and
a bypass switch connected between the grid-connected receptacle and the off-grid receptacle;
wherein the parallel socket is configured to:
when the all-in-one energy storage unit is in an off-grid state and a power supply from the off-grid port of the all-in-one energy storage unit meets a load demand of the sub-distribution box, switch off the bypass switch; and
when the all-in-one energy storage unit is in the off-grid state and the power supply from the off-grid port of the all-in-one energy storage unit fails to meet the load demand of the sub-distribution box, control the fuel-powered generator to start; and in response to that the fuel-powered generator meets a startup condition, control the all-in-one energy storage unit to switch from the off-grid state to a grid-connected state and switch on the bypass switch, allowing the all-in-one energy storage unit and the fuel-powered generator to jointly supply power to a load of the sub-distribution box through the grid-connected port and the power supply port, respectively.

12. The parallel socket according to claim 11, wherein the power supply system comprises:
a control module comprising a first control module disposed in the all-in-one energy storage unit and a second control module disposed in the parallel socket, wherein:
each of the first control module and the second control module is in a communication connection with a remote user terminal; and
the first control module and the second control module are configured to control, based on an instruction transmitted by the remote user terminal, the all-in-one energy storage unit to switch from the off-grid state to the grid-connected state or from the grid-connected state to the off-grid state.

13. The parallel socket according to claim 12, wherein the control module further comprises:
a first communication module disposed in the all-in-one energy storage unit and connected to the first control module, wherein the first control module is in a communication connection with the remote user terminal through the first communication module; and
a second communication module disposed in the parallel socket and connected to the second control module, wherein the second control module is in a communication connection with the remote user terminal through the second communication module.

14. The parallel socket according to claim 11, wherein the all-in-one energy storage unit comprises: a first switch; a second switch; a power terminal connected to the grid-connected port through the first switch and connected to the off-grid port through the second switch; and a power convert system,
wherein the power supply system is configured to: detect a voltage of a grid at the grid-connected port and a generator voltage at the generator receptacle; and when the voltage of the grid is greater than a first predetermined voltage or the generator voltage is greater than a second predetermined voltage, control, by the power convert system, the first switch to be switched on and the second switch to be switched off, to switch the all-in-one energy storage unit to the grid-connected state; and when the voltage of the grid is smaller than or equal to the first predetermined voltage and the generator voltage is smaller than or equal to the second predetermined voltage, control, by the power convert system, the second switch to be switched on and the first switch to be switched off, to switch the all-in-one energy storage unit to the off-grid state; and wherein the power supply system comprises a first photovoltaic power generation system connected to the main distribution box, wherein the power convert system is in a communication connection with the bypass switch, and wherein the power convert system is configured to: control, when the first switch is switched on, the bypass switch to be switched on; and control, when the second switch is switched on and the first photovoltaic power generation system is turned on, the bypass switch to be switched on;
or wherein the power supply system is configured to detect a voltage of a grid at the grid-connected port and a generator voltage at the generator receptacle; and when the voltage of the grid is greater than a first predetermined voltage or the generator voltage is greater than a second predetermined voltage, control, by the power convert system, the first switch to be switched on and the second switch to be switched off, to switch the all-in-one energy storage unit to the grid-connected state; and when the voltage of the grid is smaller than or equal to the first predetermined voltage and the generator voltage is smaller than or equal to the second predetermined voltage, control, by the power convert system, the second switch to be switched on and the first switch to be switched off, to switch the all-in-one energy storage unit to the off-grid state; and wherein the power supply system comprises a first photovoltaic power generation system connected to the main distribution box, wherein the bypass switch is in a communication connection with a remote user terminal, and wherein the bypass switch is configured to be switched on under control of the remote user terminal when the second switch is switched on and the first photovoltaic power generation system is turned on;
or wherein the power convert system in a communication connection with the bypass switch, the power convert system being configured to: detect a voltage signal at the power terminal; and control the bypass switch to be switched on when the voltage signal is abnormal, and wherein the power supply system is configured to: detect a voltage of a grid at the grid-connected port and a generator voltage at the generator receptacle; and when the voltage of the grid is greater than a first predetermined voltage or the generator voltage is greater than a second predetermined voltage, control, by the power convert system, the first switch to be switched on and the second switch to be switched off, to switch the all-in-one energy storage unit to the grid-connected state; and when the voltage of the grid is smaller than or equal to the first predetermined voltage and the generator voltage is smaller than or equal to the second predetermined voltage, control, by the power convert system, the second switch to be switched on and the first switch to be switched off, to switch the all-in-one energy storage unit to the off-grid state.

15. A method for controlling a power supply system, the method being applied in a power convert system of a power supply system for backup power supply to a household load, wherein the power supply system comprises an all-in-one energy storage unit and a parallel socket, wherein the all-in-one energy storage unit has a grid-connected port and an off-grid port, and comprises a first switch, a second switch, a power convert system, and a power terminal, the power terminal being connected to the grid-connected port through the first switch and connected to the off-grid port through the second switch; and
the parallel socket comprises:
a grid-connected receptacle connected to a main distribution box at a grid side, wherein the grid-connected port is connected to the grid-connected receptacle through a first pluggable connector;
an off-grid receptacle, wherein the off-grid port is connected to the off-grid receptacle through a second pluggable connector;
a generator receptacle configured to connect to a power supply port of a fuel-powered generator through a third pluggable connector, wherein both the off-grid receptacle and the generator receptacle are connected to a sub-distribution box at a load side; and
a bypass switch connected between the grid-connected receptacle and the off-grid receptacle;
wherein the method comprises:
obtaining a voltage of a grid when the all-in-one energy storage unit is in a grid-connected state;
when the voltage of the grid is smaller than a first predetermined voltage, switching off the first switch and the bypass switch, and switching on the second switch;
obtaining demand power at the load side and a remaining battery level of the all-in-one energy storage unit;
controlling, when power of the all-in-one energy storage unit is smaller than the demand power or the remaining battery level of the all-in-one energy storage unit is smaller than a predetermined value, the fuel-powered generator to start; and
in response to that the fuel-powered generator meets a startup condition, switching on the first switch and the bypass switch, and switching off the second switch.
